# EUROPEAN PATENT APPLICATION

(11) **EP 4 588 628 A1**
(43) Date of publication of application: **23.07.2025**
(21) Application number: 23865018.8
(22) Date of filing: 23.06.2023
(51) Int. Cl.: B25J 15/08

(54) **ROBOT HAND FINGERTIP STRUCTURE, ROBOT HAND FINGERTIP PART, AND ROBOT HAND**

(30) Priority: 13.09.2022 JP 2022145641
(71) Applicant: BRIDGESTONE CORPORATION, Chuo-ku Tokyo 104-8340 (JP)
(72) Inventor: MINOSHIMA, Haruki, Tokyo 104-8340 (JP)
(74) Representative: Marks & Clerk LLP
(86) International application number: PCT/JP2023/023424
(87) International publication number: WO 2024/057655

(57) **Abstract**

A fingertip structure of a robot hand includes an elastic body configuring a fingertip portion of the robot hand and having a cavity on a ventral side of a finger, an embedded member embedded in a portion of the elastic body at an opposite side from the cavity, and a fixing member attached to a finger body of the robot hand, detachably attached to the embedded member, and fixing the elastic body to the finger body.

## Description

### Technical Field

The present disclosure relates to a fingertip structure of a robot hand, a fingertip component of the robot hand, and a robot hand.

### Background Art

Japanese Patent Publication (JP-B) No. 5846057 discloses a robot hand including a plurality of claw portions for clamping a workpiece and a plurality of contact portions attached to portions of the plurality of claw portions that come into contact with the workpiece. The contact portion of the gripping device includes a bag-shaped member made of an elastic material and a granular material filling the bag-shaped member.

### SUMMARY OF INVENTION

### Technical Problem

Incidentally, in a robot hand, a fingertip may be covered with an elastic body. It is desired that the elastic body does not fall off from the fingertip due to a load of a gripping target object gripped by the fingertip and can be easily replaced. In the technique disclosed in JP-B No. 5846057, it is presumed that the bag-shaped member is firmly attached to the claw portion in order to lift a heavy workpiece. Therefore, it is difficult to replace only the bag-shaped member with respect to the claw portion, and the bag-shaped member is replaced together with the claw portion.

An object of the disclosure is to curb falling off of an elastic body configuring a fingertip portion and to make the elastic body easily replaceable with respect to a finger body.

### Solution to Problem

According to a first aspect of the disclosure, there is provided a fingertip structure of a robot hand, the fingertip structure including an elastic body configuring a fingertip portion of the robot hand and having a cavity on a ventral side of a finger; an embedded member embedded in a portion of the elastic body at an opposite side from the cavity; and a fixing member attached to a finger body of the robot hand, detachably attached to the embedded member, and fixing the elastic body to the finger body.

According to a fingertip structure of a robot hand of a second aspect of the disclosure, in the fingertip structure of the robot hand of the first aspect, the cavity of the elastic body is disposed at least at a center of the elastic body in a width direction of the finger.

A fingertip structure of a robot hand according to a third aspect of the disclosure is the fingertip structure of the robot hand according to the first aspect or the second aspect, in which the fixing member is fastened to the embedded member via a fastening member.

According to a fingertip structure of a robot hand of a fourth aspect of the disclosure, in the fingertip structure of the robot hand of the third aspect, in which the fixing member includes a plate portion, a gap into which the plate portion is inserted is provided adjacent to the embedded member in a portion of the elastic body an opposite side from the cavity than the embedded member, and the embedded member and the plate portion are fastened via the fastening member in a state in which the plate portion is inserted into the gap.

According to a fingertip structure of a robot hand of a fifth aspect of the disclosure, in the fingertip structure of the robot hand of the fourth aspect, a through-hole through which a screw member that is the fastening member that fastens the plate portion inserted into the gap and the embedded member passes is formed in an outer peripheral portion of the elastic body.

According to a fingertip structure of a robot hand of a sixth aspect of the disclosure, in the fingertip structure of the robot hand of any one of the first to fifth aspects, a low elasticity member having an elasticity lower than an elasticity of the elastic body is inserted into the cavity of the elastic body.

According to a fingertip structure of a robot hand of a seventh aspect of the disclosure, in the fingertip structure of the robot hand of any one of the first to sixth aspects, an engagement portion is provided on an attachment surface of the finger body with respect to the fixing member, and an engaging portion that engages with the engagement portion to determine an orientation of the elastic body is provided on an attachment surface of the fixing member with respect to the finger body.

According to an eighth aspect of the disclosure, there is provided a fingertip component of a robot hand including an elastic body configuring a fingertip portion of the robot hand and having a cavity on a ventral side of a finger; an embedded member embedded in a portion of the elastic body at an opposite side from the cavity; and a fixing member attachable to a finger body of the robot hand, attachable to and detachable from the embedded member, and fixing the elastic body to the finger body by being attached to the finger body and the embedded member.

According to a ninth aspect of the disclosure, there is provided a robot hand including a finger body of the robot hand; an elastic body configuring a fingertip portion of the robot hand and having a cavity on a ventral side of a finger; an embedded member embedded in a portion of the elastic body at an opposite side from the cavity; and a fixing member attached to the finger body, detachably attached to the embedded member, and fixing the elastic body to the finger body.

### Advantageous Effects of Invention

According to the disclosure, it is possible to curb falling off of the elastic body configuring the fingertip portion and to easily replace the elastic body with respect to the finger body.

### BRIEF DESCRIPTION OF DRAWINGS

Fig. 1 is a perspective view illustrating a finger of a robot hand according to an embodiment of the disclosure.
Fig. 2 is a longitudinal sectional view of the finger illustrated in Fig. 1.
Fig. 3 is an enlarged longitudinal sectional view of a fingertip portion of the finger illustrated in Fig. 2.
Fig. 4 is a cross-sectional view taken along line 4X-4X of the fingertip portion illustrated in Fig. 3.
Fig. 5 is a front view of the fingertip portion illustrated in Fig. 3 as viewed from a direction of an arrow 5X.
Fig. 6 is an exploded perspective view of the fingertip portion illustrated in Fig. 2.
Fig. 7 is a cross-sectional view taken along line 7X-7X of the fingertip portion illustrated in Fig. 6.
Fig. 8 is an enlarged longitudinal sectional view of a fingertip portion of a robot hand according to another embodiment of the disclosure (an enlarged longitudinal sectional view corresponding to Fig. 3).
Fig. 9 is a cross-sectional view taken along line 9X-9X of the fingertip portion illustrated in Fig. 8.
Fig. 10 is an enlarged longitudinal cross-sectional view of a fingertip portion of a robot hand according to still another embodiment of the disclosure (an enlarged longitudinal cross-sectional view corresponding to Fig. 3).
Fig. 11 is a view illustrating a configuration example of a transfer robot using a robot hand according to an embodiment of the disclosure.

### DESCRIPTION OF EMBODIMENTS

Hereinafter, modes for carrying out the disclosure will be described with reference to the drawings. Constituents denoted by the same reference numerals in the drawings indicate the same or similar constituents. Overlapping descriptions and reference numerals in the embodiments described below may be omitted. The drawings used in the following description are all schematic, and dimensional relationships of respective elements, ratios of respective elements, and the like illustrated in the drawings do not necessarily coincide with actual ones. Dimensional relationships of the respective elements, ratios of the respective elements, and the like do not necessarily coincide among the plurality of drawings.

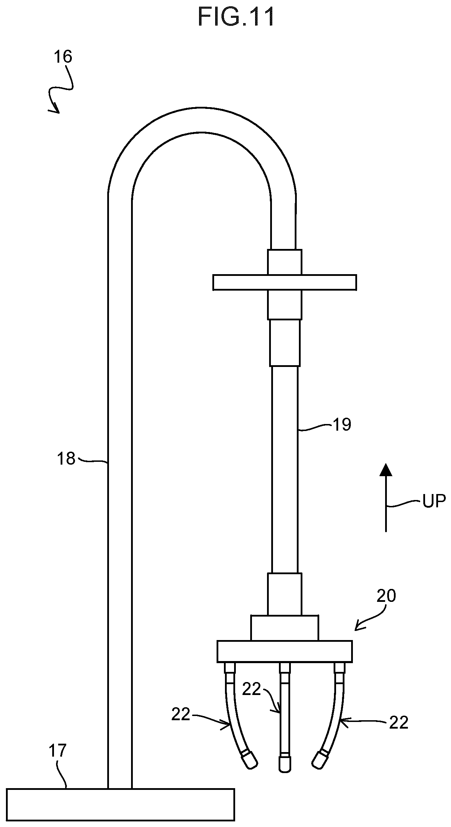

A fingertip structure of a robot hand according to an embodiment of the disclosure is a structure of fingertips of a plurality of fingers 22 of a robot hand 20 (see Fig. 11). Fig. 11 illustrates an example of a transfer robot 16 using the robot hand 20 of the present embodiment.

As illustrated in Fig. 11, the transfer robot 16 includes a rotatable pedestal portion 17, a support portion 18, an extendable arm portion 19, and the robot hand 20 as a hand portion (also referred to as a grip portion). In the transfer robot 16, the arm portion 19 extends and contracts, so that the robot hand 20 approaches or separates from a gripping target object. The arm portion 19 extends to grip the gripping target object with the plurality of fingers 22 of the robot hand 20, and the arm portion 19 contracts in this state to lift the gripping target object. Thereafter, the pedestal portion 17 is rotated to lower the gripping target object to another place. By using the transfer robot 16 in this manner, the gripping target object can be transferred.

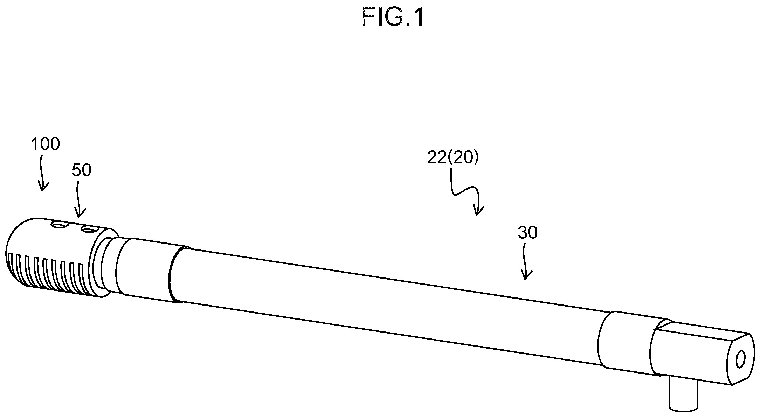

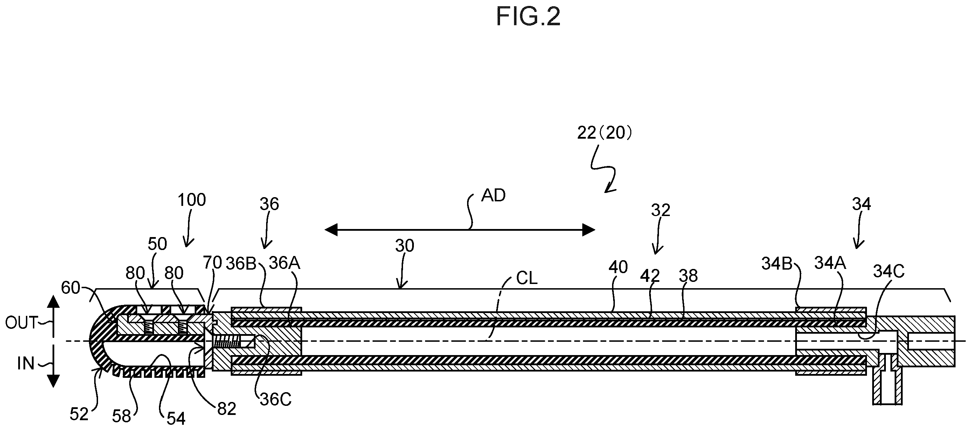

As illustrated in Figs. 1 and 2, the finger 22 includes a finger body 30 and a fingertip portion 50.

The finger body 30 is a portion that is curved in a case in which a driving force is applied to the portion configuring the finger 22. Specifically, the finger body 30 is a portion that is curved by being applied by a driving force being applied thereto to bring the fingertip portion 50 close to and into contact with a gripping target object. In the present embodiment, as an example, the finger body 30 is configured by a fluid pressure actuator curved by a pressure of a fluid. Fluids herein include a gas and a liquid.

As illustrated in Fig. 2, the finger body 30 includes an actuator portion 32, a sealing mechanism 34, and a sealing mechanism 36.

The actuator portion 32 has a tubular shape, and both ends thereof are sealed by the sealing mechanism 34 and the sealing mechanism 36. A fluid is supplied into the actuator portion 32. In a case in which the fluid is supplied into the actuator portion 32, the actuator portion 32 is curved.

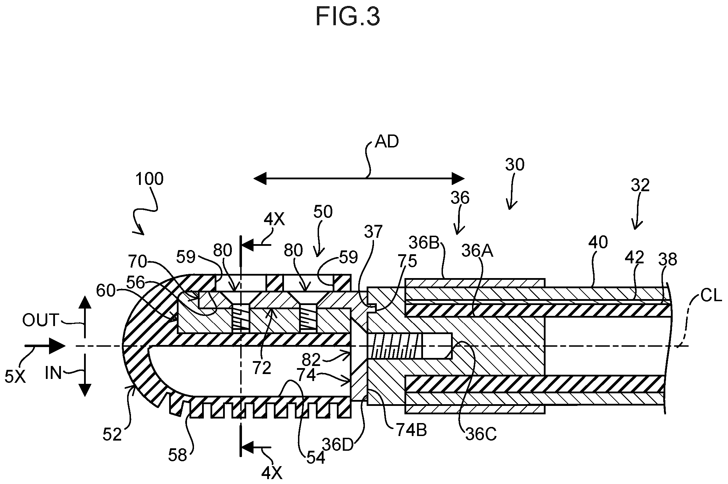

As illustrated in Figs. 2 and 3, the actuator portion 32 includes a tube 38, a sleeve 40, and a restraint member 42.

The tube 38 is a cylindrical body that is caused to expand and contract by the pressure of the fluid. The tube 38 is made of an elastic material such as rubber such that contraction and expansion are repeated by the fluid.

The sleeve 40 has a cylindrical shape and covers an outer peripheral surface of the tube 38. The sleeve 40 is a stretchable structure in which fiber cords oriented in a predetermined direction are interwoven, and a rhombic shape is repeated by crossing the oriented cords. The sleeve 40 is pantograph deformed by the oriented cords having such a rhomboid shape and restricts and also follows the contraction and expansion of the tube 38. As a cord forming the sleeve 40, a fiber cord of aromatic polyamide (aramid fiber) or polyethylene terephthalate (PET) is preferably used. The disclosure is not limited to this configuration. For example, a cord of a high-strength fiber such as a PBO fiber (polyparaphenylene benzobisoxazole) may be used.

The restraint member 42 is provided between the tube 38 and the sleeve 40. The restraint member 42 is a member that resists compression in an axial direction of the actuator portion 32 and is deformable in a direction orthogonal to the axial direction (a radial direction of the actuator portion 32). The restraint member 42 extends from one end to the other end of the tube 38. In the present embodiment, a leaf spring is used as an example of the restraint member 42.

As illustrated in Fig. 2, the sealing mechanism 34 includes a sealing member 34A and a caulking member 34B. The sealing member 34A seals one end (the right end in Fig. 2) of the tube 38. The caulking member 34B caulks the tube 38 and the sleeve 40 together with the sealing member 34A. The sealing member 34A is provided with a supply path 34C for supplying a fluid into the tube 38. A driving pressure source that applies a driving force to the actuator portion 32, specifically, a pipe extending from a gas or liquid compressor is connected to the supply path 34C.

As illustrated in Figs. 2 and 3, the sealing mechanism 36 includes a sealing member 36A and a caulking member 36B. The sealing member 36A seals the other end (the left end in Fig. 2) of the tube 38. The caulking member 36B caulks the tube 38 and the sleeve 40 together with the sealing member 36A. The sealing member 36A is provided with an attachment hole 36C for attaching a fixing member 70 that will be described later.

The fingertip portion 50 is a tip portion of the finger 22, and is a portion that comes into contact with a gripping target object. The fingertip portion 50 includes an elastic body 52, an embedded member 60, and a fixing member 70.

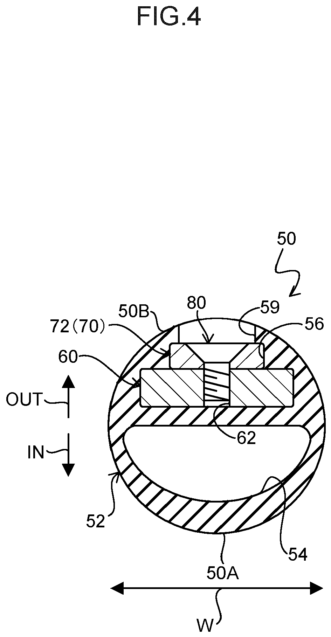

As illustrated in Figs. 3 and 4, the elastic body 52 has a cavity 54 on the ventral side of the finger. Here, the ventral side of the finger 22 is the inner side of the finger 22. The inner side of the finger is a side indicated by an arrow IN in Figs. 3 and 4. The cavity 54 opens in a surface of the elastic body 52 on the finger body 30 side (in other words, opposite to the tip of the elastic body 52). The cavity 54 of the elastic body 52 is disposed at least at the center of the elastic body 52 in a width direction of the finger 22. The width direction of the finger 22 is a direction indicated by an arrow W in Fig. 4. As illustrated in Fig. 4, the cavity 54 of the elastic body 52 of the present embodiment is formed from the center to both ends of the finger 22 in the width direction. As illustrated in Fig. 3, the cavity 54 of the elastic body 52 extends from the opening side of the elastic body 52 toward the tip. In the present embodiment, a tip shape of the elastic body 52 is a hemispherical shape, but the disclosure is not limited to this configuration. It is preferable to use an optimum tip shape according to a condition for gripping a gripping target object (a shape of, a gripping force for, or the like of the gripping target object).

In the elastic body 52, an embedded member 60 is embedded on a side opposite to the cavity 54 (the back side of the finger 22), and a gap 56 is formed adjacent to the embedded member 60. A plate portion 72 of the fixing member 70 that will be described later is inserted into the gap 56.

Since the elastic body 52 is a portion that comes into contact with a gripping target object, it is preferable that the elastic body 52 is made of a low elastic material. For example, the elastic body 52 may be made of silicon rubber. In a case in which the elastic body 52 is made of silicone rubber, a shape of the elastic body 52 can be brought closer to a shape suitable for gripping compared with a case in which the elastic body 52 is made of natural rubber.

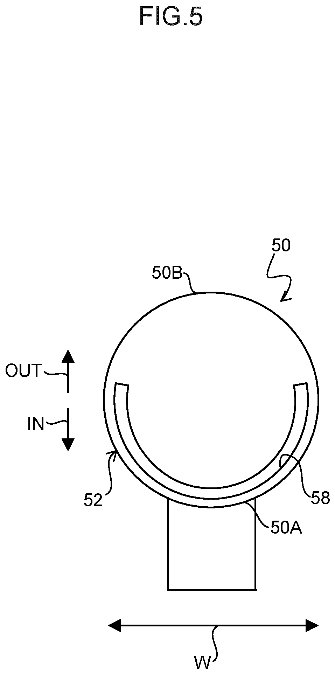

An anti-slip portion may be provided on an inside outer peripheral surface of the elastic body 52, that is, a ventral surface 50A of the fingertip portion 50. By providing the non-slip portion, it is possible to curb falling off of a gripping target object gripped by the fingers 22. The non-slip portion may be a groove, unevenness, or the like provided on the ventral surface 50A. In the elastic body 52, only the non-slip portion may be formed of an elastic material having different properties (for example, the friction force is high.) from other portions. In the present embodiment, a plurality of grooves 58 extending in the peripheral direction of the elastic body 52 are formed as non-slip portions on the inside outer peripheral surface of the elastic body 52 at intervals in a longitudinal direction of the finger 22 (see Figs. 3 and 5). The longitudinal direction of the finger 22 (also referred to as an extending direction of the finger 22) is the same direction as the axial direction of the actuator portion 32 of the finger body 30. Therefore, the longitudinal direction of the finger 22 is indicated by an arrow AD direction in the drawing. In the drawings, the reference sign CL denotes a center line of the finger 22 including the finger body 30 and the fingertip portion 50.

A through-hole 59 is formed on an outside outer peripheral surface of elastic body 52, that is, on a back surface 50B side of the fingertip portion 50 (see Figs. 3 and 4). The through-hole 59 is a hole through which a screw member 80 serving as a fastening member that fastens the plate portion 72 inserted into the gap 56 and the embedded member 60 passes. In the present embodiment, a hole diameter of the through-hole 59 is larger than an outer diameter of a screw head 80A of the screw member 80.

As illustrated in Fig. 4, the embedded member 60 is embedded in a portion of the elastic body 52 at an opposite side from the cavity 54. Specifically, the embedded member 60 is fixed to the elastic body 52 by being embedded in the elastic body 52. The embedded member 60 may be embedded and fixed (secured) at the time of molding the elastic body 52 (for example, during insert molding), or may be embedded in the molded elastic body 52 and fixed with an adhesive or the like.

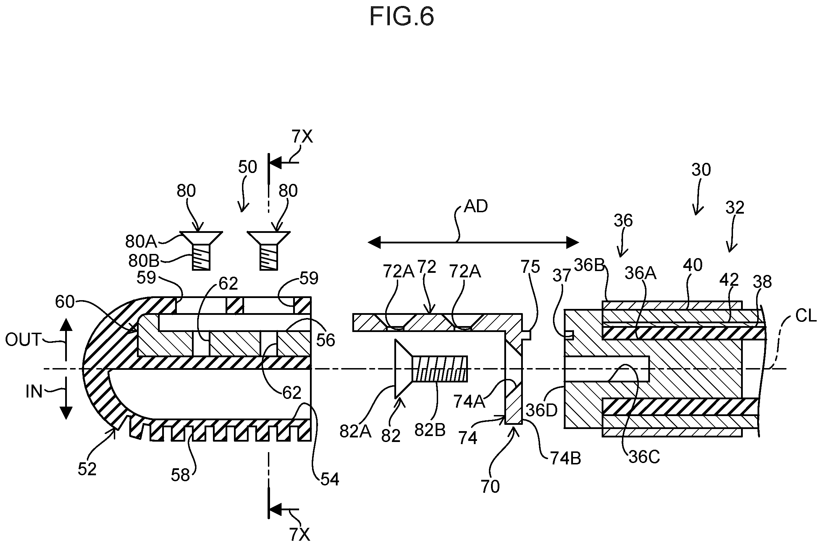

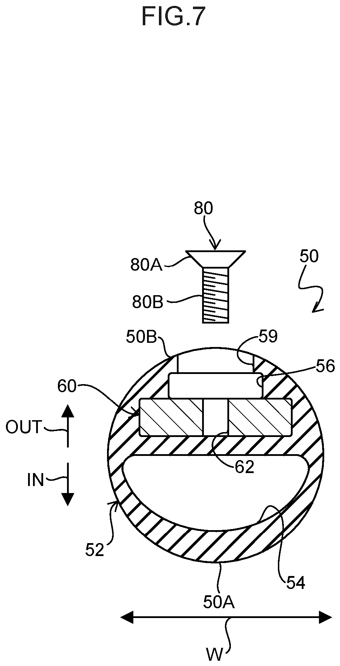

As illustrated in Figs. 3 and 4, the embedded member 60 is formed in a plate shape, and extends from the opening side of the elastic body 52 toward the tip. The embedded member 60 is made of a higher elastic material than the elastic body 52. In the present embodiment, as an example, the embedded member 60 is made of a metal material. The embedded member 60 is provided with a screw hole 62 (see Figs. 6 and 7) into which a screw member 80 for fastening and fixing the fixing member 70 is screwed.

As illustrated in Figs. 3 and 6, the fixing member 70 is detachably attached to the embedded member 60. The fixing member 70 is attached to the sealing member 36A of the finger body 30. Specifically, the fixing member 70 is a plate material bent in an L shape, one side of the plate material is a plate portion 72 fastened and fixed to the embedded member 60 by using the screw member 80, and the other side of the plate material is a plate portion 74 fastened and fixed to the sealing member 36A of the finger body 30 by using the screw member 82. The plate portion 72 of the fixing member 70 can be inserted into the gap 56 of the elastic body 52. In a state in which the plate portion 72 is inserted into the gap 56, as illustrated in Fig. 3, the plate portion 72 is adjacent to the embedded member 60. In this state, the embedded member 60 and the plate portion 72 are fastened and fixed via the screw member 80.

The fixing member 70 is made of a higher elastic material than the elastic body 52. In the present embodiment, as an example, the fixing member 70 is made of a metal material. The plate portion 72 of the fixing member 70 is provided with a passing hole 72A (see Fig. 6) through which the screw portion 80B of the screw member 80 for fastening and fixing the plate portion 72 to the embedded member 60 passes. The plate portion 74 of the fixing member 70 is provided with a passing hole 74A (see Fig. 6) through which the screw portion 82B of the screw member 82 for fastening and fixing the plate portion 74 to the sealing member 36A passes. The reference numeral 82A indicates a screw head of the screw member 82.

In the present embodiment, as illustrated in Fig. 6, countersunk screws are used as the screw member 80 and the screw member 82, but the disclosure is not limited to this configuration. For example, a pan screw or a bolt may be used.

As illustrated in Figs. 3 and 6, an attachment surface 36D of the finger body 30 with respect to the fixing member 70 may be provided with a recess 37 serving as an engagement portion, and an attachment surface 74B of the fixing member 70 with respect to the finger body 30 may be provided with a protrusion 75 serving as an engaging portion that is engaged (fitted) with the recess 37 to determine an orientation of the elastic body 52. Specifically, the recess 37 is provided in an attachment surface 36D which is a surface of the sealing member 36A on a side where an attachment hole 36C is provided. The protrusion 75 is provided on an attachment surface 74B which is an outer surface (a surface opposite to the plate portion 72) of the plate portion 74. A position (orientation) of the elastic body 52 with respect to the finger body 30 is determined by fitting the protrusion 75 into the recess 37.

A fingertip component 100 of the present embodiment includes the elastic body 52, the embedded member 60, and the fixing member 70. That is, the fingertip component 100 is a component in which the fixing member 70 is attached to the elastic body 52 and the embedded member 60 configuring the fingertip portion 50. In a case in which the elastic body 52 is replaced with respect to the finger body 30, the fingertip component 100 which is a replacement component is shipped in a state in which the fixing member 70 is attached to the embedded member 60 of the elastic body 52 as described above, or in a state in which the elastic body 52, the embedded member 60, and the fixing member 70 are placed in the same container.

### (Operation)

Next, an operation of the embodiment will be described.

In the fingertip structure of the robot hand 20 of the present embodiment, since the cavity 54 is present on the ventral side of the elastic body 52 configuring the fingertip portion 50, the ventral surface 50A of the elastic body 52 is easily elastically deformed toward the cavity 54 in a case in which a gripping target object is gripped by the fingertip portion 50 (elastic body 52). Therefore, a gripping force acting on a gripping target object from the fingertip portion 50 can be reduced. Therefore, in the present embodiment, a gripping force acting on a gripping target object from the fingertip portion 50 can be reduced compared with a case in which the cavity 54 is not provided on the ventral side of the elastic body 52. The ventral side of the elastic body 52 may also be referred as a side of the elastic body 52 coming into contact with a gripping target object.

In the fingertip structure of the present embodiment, the embedded member 60 embedded in the elastic body 52 is attached to the finger body 30 via the fixing member 70. Therefore, in the present embodiment, for example, it is possible to curb falling off of the elastic body 52 in a case in which a gripping target object is gripped compared with a configuration in which the fingertip is simply covered with the elastic body. **In** the present embodiment, the elastic body 52 configuring the fingertip portion 50 can be removed from the finger body 30 by detaching the embedded member 60 from the fixing member 70. As described above, in the present embodiment, the elastic body 52 can be replaced with respect to the finger body 30 through simple work of attaching the embedded member 60 of another elastic body 52 to the fixing member 70 from which the embedded member 60 has been detached.

As described above, according to the present embodiment, the elastic body 52 configuring the fingertip portion 50 can be curbed from falling off, and the elastic body 52 can be easily replaced with respect to the finger body 30.

In the fingertip structure of the present embodiment, the cavity 54 of the elastic body 52 is disposed at least at the center of the elastic body 52 in the width direction of the finger. In a case in which the fingertip portion 50 grips a gripping target object, the center of the ventral surface 50A of the fingertip portion 50 in the width direction mainly comes into contact with the gripping target object. Therefore, by disposing the cavity 54 at the center of the elastic body 52 in the width direction of the finger, for example, a gripping force acting on a gripping target object can be effectively reduced compared with a configuration in which the cavity is disposed only at both ends of the elastic body 52 in the width direction of the finger. In particular, in the present embodiment, since the cavity 54 is provided from the center to both end portions in the width direction of the ventral surface 50A of the fingertip portion 50, a gripping force acting on a gripping target object can be reduced even if the gripping target object is gripped by any portion of the ventral surface 50A of the fingertip portion 50.

In the fingertip structure of the present embodiment, since the fixing member 70 is fastened to the embedded member 60 by the screw member 80, work of detaching the fixing member 70 and the embedded member 60 can be easily performed by using a fastening tool.

In the fingertip structure of the present embodiment, the embedded member 60 and the plate portion 72 are fastened via the screw member 80 in a state in which the plate portion 72 of the fixing member 70 is inserted into the gap 56 of the elastic body 52. That is, since the plate portion 72 of the fixing member 70 and the fastening portion between the embedded member 60 and the fixing member 70 are located inside the elastic body 52, it is possible to curb these portions from coming into contact with a gripping target object.

In the fingertip structure of the present embodiment, the plate portion 72 of the fixing member 70 and the embedded member 60 can be fastened (attached) and unfastened (detached) by turning the screw member 80 through the through-hole 59 formed in the outer peripheral portion of the elastic body 52. By forming the through-hole 59 in the outer peripheral portion of the elastic body 52 as described above, it is possible to easily perform work of fastening and unfastening the fixing member 70 and the embedded member 60 from the outer periphery of the elastic body 52.

In the fingertip structure of the present embodiment, in a case in which the fingertip portion 50 is attached to the finger body 30, a position (including an orientation) of the fingertip portion 50 with respect to the finger body 30 can be determined by engaging (fitting) the protrusion 75 of the fixing member 70 with the recess 37 of the finger body 30. This facilitates positioning work in a case in which the fingertip portion 50 is attached to the finger body 30.

### Other Embodiments

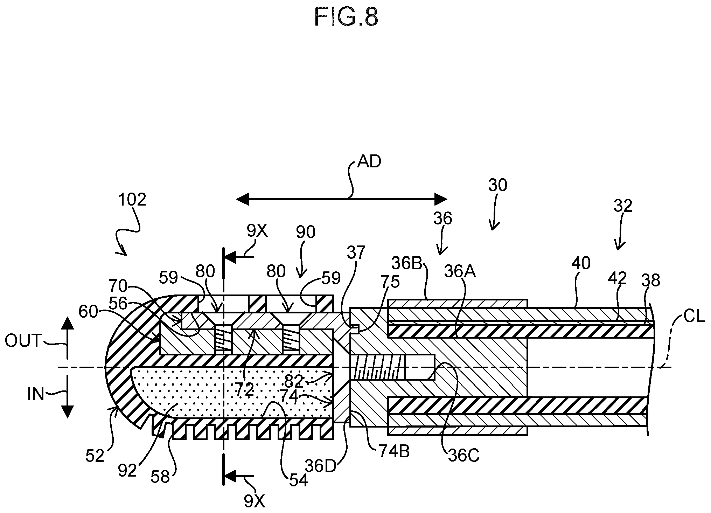

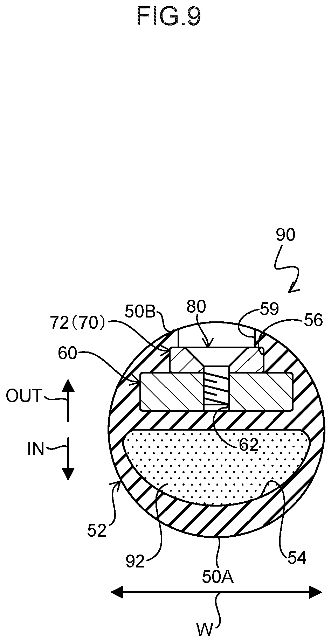

Although an example of the embodiment of the disclosure has been described above, an embodiment of the disclosure is not limited to the above embodiment, and various modifications can be made without departing from the concept of the disclosure in addition to the above embodiment. For example, as in a fingertip portion 90 illustrated in Figs. 8 and 9, a low elasticity member 92 having an elasticity lower than an elasticity of the elastic body 52 may be inserted into a cavity 54 of the elastic body 52. As the low elasticity member 92, for example, a cushion material such as urethane is preferably used. In the fingertip structure in which the low elasticity member 92 is inserted into the cavity 54 of the elastic body 52 as described above, a gripping force acting on a gripping target object in the case of gripping the gripping target object can be adjusted depending on an elastic modulus of the cavity 54. The low elasticity member 92 may be detachable from the cavity 54. In the case of such a configuration, it is possible to optimize a gripping force acting on a gripping target object by preparing a plurality of low elasticity members 92 having different elastic moduli and inserting the optimum low elasticity member 92 into the cavity 54 according to a gripping condition. The reference numeral 102 in Fig. 8 denotes a fingertip component including the elastic body 52, the embedded member 60, the fixing member 70, and the low elasticity member 92.

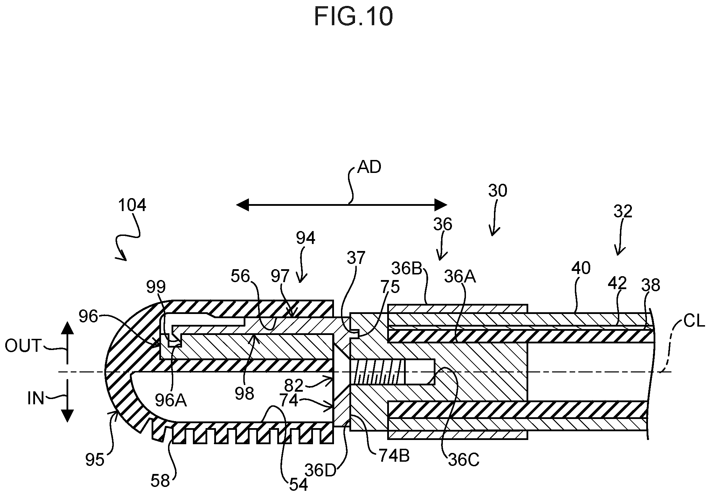

In the above-described embodiment, the screw member 80 is used for attaching the embedded member 60 and the fixing member 70, but the disclosure is not limited to this configuration. For example, like a fingertip portion 94 illustrated in Fig. 10, a claw portion 99 provided on a plate portion 98 of a fixing member 97 may be configured to be caught by a recess 96A of an embedded member 96. The reference numeral 104 in Fig. 10 denotes a fingertip component including the elastic body 95, the embedded member 96, and the fixing member 97.

In the above-described embodiment, a single cavity 54 is provided on the ventral side of the elastic body 52, but the disclosure is not limited to this configuration. For example, a plurality of cavities may be provided on the ventral side of the elastic body 52.

In the above-described embodiment, the fixing member 70 is provided with the protrusion 75 serving as an engaging portion, and the sealing member 36A is provided with the recess 37 serving as an engagement portion. However, the disclosure is not limited to this configuration. It is sufficient that a position (orientation) of the elastic body 52 with respect to the finger body 30 can be determined, and for example, a recess may be provided in the fixing member 70 and a protrusion may be provided in the sealing member 36A.

Next, the following supplementary notes regarding the present embodiment will be disclosed.

### (Supplementary Note 1)

A fingertip structure of a robot hand, the fingertip structure including:
an elastic body configuring a fingertip of the robot hand and having a cavity on a ventral side of a finger;
an embedded member embedded in a portion of the elastic body at an opposite side from the cavity; and
a fixing member attached to a finger body of the robot hand, detachably attached to the embedded member, and fixing the elastic body to the finger body.

In the fingertip structure of the robot hand of Supplementary Note 1, since the cavity is provided on the ventral side of the finger of the elastic body configuring the fingertip (hereinafter, abbreviated to a "ventral side" as appropriate), the ventral surface of the finger of the elastic body (hereinafter, abbreviated to a "ventral surface" as appropriate) is easily elastically deformed toward the cavity in a case in which a gripping target object is gripped by the fingertip (elastic body). Thus, a gripping force acting on a gripping target object from the fingertip portion can be reduced. Therefore, according to the fingertip structure, it is possible to reduce a gripping force acting on a gripping target object from the fingertip portion compared with a case in which there is no cavity on the ventral side of the elastic body.

The ventral side of the finger of the elastic body may also referred to as a side of the elastic body coming into contact with a gripping target object.

In the fingertip structure of the robot hand of Supplementary Note 1, the embedded member embedded in the elastic body is attached to the finger body via the fixing member. Therefore, in the fingertip structure, for example, it is possible to curb falling off of the elastic body in a case in which a gripping target object is gripped compared with a configuration in which the fingertip is simply covered with the elastic body. In the fingertip structure, the elastic body can be removed from the finger body by detaching the embedded member from the fixing member. As described above, in the fingertip structure, the elastic body configuring the fingertip portion can be replaced with respect to the finger body through simple work of attaching an embedded member of another elastic body to the fixing member from which the embedded member has been detached.

As described above, according to the fingertip structure of the robot hand of Supplementary Note 1, it is possible to curb falling off of the elastic body configuring the fingertip portion and to easily replace the elastic body with respect to the finger body.

### (Supplementary Note 2)

The fingertip structure of the robot hand according to Supplementary Note 1, in which the cavity of the elastic body is disposed at least at a center of the elastic body in a width direction of the finger.

In the fingertip structure of the robot hand of Supplementary Note 2, the cavity of the elastic body is disposed at least at the center of the elastic body in the width direction of the finger (hereinafter, abbreviated to a "width direction center " as appropriate). In a case in which the fingertip portion grips a gripping target object, the width direction center of the ventral surface of the fingertip portion mainly comes into contact with the gripping target object. Thus, by disposing the cavity at the width direction center on the ventral side of the elastic body, for example, compared with a configuration in which the cavity is disposed only at both ends in the width direction on the ventral side of the elastic body, a gripping force acting on a gripping target object can be effectively reduced.

### (Supplementary Note 3)

The fingertip structure of the robot hand according to Supplementary Note 1 or 2, in which the fixing member is fastened to the embedded member via a fastening member.

In the fingertip structure of the robot hand of Supplementary Note 3, since the fixing member is fastened to the embedded member by the fastening member, work of detaching the fixing member and the embedded member can be easily performed by using a fastening tool.

### (Supplementary Note 4)

The fingertip structure of the robot hand according to Supplementary Note 3, in which
the fixing member includes a plate portion,
a gap into which the plate portion is inserted is provided adjacent to the embedded member in a portion of the elastic body further toward an opposite side from the cavity than the embedded member, and
the embedded member and the plate portion are fastened via the fastening member in a state in which the plate portion is inserted into the gap.

In the fingertip structure of the robot hand of Supplementary Note 4, the embedded member and the plate portion are fastened via the fastening member in a state in which the plate portion of the fixing member is inserted into the gap of the elastic body. That is, since the plate portion of the fixing member and the fastening portion between the embedded member and the fixing member are located inside the elastic body, it is possible to curb these portions from coming into contact with a gripping target object.

### (Supplementary Note 5)

The fingertip structure of the robot hand according to Supplementary Note 4, in which the fastening member, which fastens the plate portion inserted into the gap and the embedded member, comprises a screw member, and a through-hole, through which the screw member passes, is formed in an outer peripheral portion of the elastic body.

In the fingertip structure of the robot hand of Supplementary Note 5, the plate portion of the fixing member and the embedded member can be fastened (attached) and unfastened (detached) by turning the screw member through the through-hole formed in the outer peripheral portion of the elastic body. By forming the through-hole in the outer peripheral portion of the elastic body as described above, it is possible to easily perform work of fastening and unfastening the fixing member and the embedded member from the outer periphery of the elastic body.

### (Supplementary Note 6)

The fingertip structure of the robot hand according to any one of Supplementary Notes 1 to 5, in which a low elasticity member having a lower elasticity than the elastic body is inserted into the cavity of the elastic body.

In the fingertip structure of the robot hand of Supplementary Note 6, the low elasticity member is inserted into the cavity of the elastic body, so that a gripping force acting on a gripping target object in a case in which the gripping target object is gripped can be adjusted.

### (Supplementary Note 7)

The fingertip structure of the robot hand according to any one of Supplementary Notes 1 to 6, in which:
an engagement portion is provided on an attachment surface of the finger body to the fixing member, and
an engaging portion that engages with the engagement portion and determines an orientation of the elastic body is provided on an attachment surface of the fixing member to the finger body.

In the fingertip structure of the robot hand of supplementary note 7, in a case in which the elastic body is attached to the finger body, a position (including an orientation) of the elastic body with respect to the finger body can be determined by engaging the engaging portion of the fixing member with the engagement portion of the finger body. This facilitates positioning work in a case in which the elastic body is attached to the finger body.

### (Supplementary Note 8)

A fingertip component of a robot hand, the fingertip component including:
an elastic body configuring a fingertip portion of the robot hand and having a cavity on a ventral side of a finger;
an embedded member embedded in a portion of the elastic body at an opposite side from the cavity; and
a fixing member attachable to a finger body of the robot hand, attachable to and detachable from the embedded member, and fixing the elastic body to the finger body by being attached to the finger body and the embedded member.

In the fingertip component of the robot hand of Supplementary Note 8, since the cavity is provided on the ventral side of the finger of the elastic body configuring the fingertip portion, the ventral surface of the finger of the elastic body is easily elastically deformed toward the cavity side in a case in which a gripping target object is gripped by the fingertip (elastic body). Thus, a gripping force acting on a gripping target object from the fingertip portion can be reduced. Therefore, according to the fingertip component, it is possible to reduce a gripping force acting on a gripping target object from the fingertip portion compared with a case in which there is no cavity on the ventral side of the elastic body.

In the fingertip component of the robot hand of Supplementary Note 8, the embedded member embedded in the elastic body is attached to the finger body via the fixing member. Therefore, in the fingertip component, for example, it is possible to curb falling off of the elastic body in a case in which a gripping target object is gripped compared with a configuration in which the fingertip is simply covered with the elastic body. In the fingertip component, the elastic body can be removed from the finger body by detaching the embedded member from the fixing member. As described above, in the fingertip component, the elastic body can be replaced with respect to the finger body through simple work of attaching an embedded member of another elastic body to the fixing member from which the embedded member has been detached.

As described above, according to the fingertip component of the robot hand of Supplementary Note 8, it is possible to curb falling off of the elastic body configuring the fingertip portion and to easily replace the elastic body with respect to the finger body.

### (Supplementary Note 9)

A robot hand including:
a finger body of the robot hand;
an elastic body configuring a fingertip portion of the robot hand and having a cavity on a ventral side of a finger;
an embedded member embedded in a portion of the elastic body at an opposite side from the cavity; and
a fixing member attached to the finger body, detachably attached to the embedded member, and fixing the elastic body to the finger body.

In the robot hand of Supplementary Note 9, since the cavity is provided on the ventral side of the finger of the elastic body configuring the fingertip portion, the ventral surface of the finger of the elastic body is easily elastically deformed toward the cavity side in a case in which a gripping target object is gripped by the fingertip (elastic body). Thus, a gripping force acting on a gripping target object from the fingertip portion can be reduced. Therefore, according to the robot hand, it is possible to reduce a gripping force acting on a gripping target object from the fingertip portion compared with a case in which there is no cavity on the ventral side of the elastic body configuring the fingertip portion.

In the robot hand of Supplementary Note 9, the embedded member embedded in the elastic body is attached to the finger body via the fixing member. Therefore, in the robot hand, for example, it is possible to curb falling off of the elastic body in a case in which a gripping target object is gripped compared with a configuration in which the fingertip is simply covered with the elastic body. In the robot hand, the elastic body can be removed from the finger body by detaching the embedded member from the fixing member. As described above, in the robot hand, the elastic body can be replaced with respect to the finger body through simple work of attaching an embedded member of another elastic body to the fixing member from which the embedded member has been detached.

As described above, according to the robot hand of Supplementary Note 9, it is possible to curb falling off of the elastic body configuring the fingertip portion and to easily replace the elastic body with respect to the finger body.

All documents, patent applications, and technical standards described in this specification are incorporated herein by reference to the same extent as if each document, patent application, and technical standard were specifically and individually indicated to be incorporated by reference. The disclosure of Japanese Patent Application No. 2022-145641 filed on September 13, 2022 is incorporated herein by reference in its entirety.

## Claims

1. A fingertip structure of a robot hand, the fingertip structure comprising:
an elastic body configuring a fingertip portion of the robot hand and having a cavity on a ventral side of a finger;
an embedded member embedded in a portion of the elastic body at an opposite side from the cavity; and
a fixing member attached to a finger body of the robot hand, detachably attached to the embedded member, and fixing the elastic body to the finger body.

2. The fingertip structure of the robot hand according to claim 1, wherein the cavity of the elastic body is disposed at least at a center of the elastic body in a width direction of the finger.

3. The fingertip structure of the robot hand according to claim 1 or 2, wherein the fixing member is fastened to the embedded member via a fastening member.

4. The fingertip structure of the robot hand according to claim 3, wherein:
the fixing member includes a plate portion,
a gap into which the plate portion is inserted is provided adjacent to the embedded member in a portion of the elastic body further toward an opposite side from the cavity than the embedded member, and
the embedded member and the plate portion are fastened via the fastening member in a state in which the plate portion is inserted into the gap.

5. The fingertip structure of the robot hand according to claim 4, wherein the fastening member, which fastens the plate portion inserted into the gap and the embedded member, comprises a screw member, and a through-hole, through which the screw member passes, is formed in an outer peripheral portion of the elastic body.

6. The fingertip structure of the robot hand according to any one of claims 1 to 5, wherein a low elasticity member having a lower elasticity than the elastic body is inserted into the cavity of the elastic body.

7. The fingertip structure of the robot hand according to any one of claims 1 to 6, wherein:
an engagement portion is provided on an attachment surface of the finger body to the fixing member, and
an engaging portion that engages with the engagement portion and determines an orientation of the elastic body is provided on an attachment surface of the fixing member to the finger body.

8. A fingertip component of a robot hand, the fingertip component comprising:
an elastic body configuring a fingertip portion of the robot hand and having a cavity on a ventral side of a finger;
an embedded member embedded in a portion of the elastic body at an opposite side from the cavity; and
a fixing member attachable to a finger body of the robot hand, attachable to and detachable from the embedded member, and fixing the elastic body to the finger body by being attached to the finger body and the embedded member.

9. A robot hand, comprising:
a finger body of the robot hand;
an elastic body configuring a fingertip portion of the robot hand and having a cavity on a ventral side of a finger;
an embedded member embedded in a portion of the elastic body at an opposite side from the cavity; and
a fixing member attached to the finger body, detachably attached to the embedded member, and fixing the elastic body to the finger body.
